# FASCICULE DE BREVET EUROPEEN

(11) **EP 2 909 073 B1**
(45) Date de publication et mention de la délivrance du brevet: **14.12.2016**
(21) Numéro de dépôt: 13808069.2
(22) Date de dépôt: 17.10.2013
(51) Int. Cl.: B62D 27/02, B62D 29/04, B62D 27/00

(54) **COMPOSANT DE VÉHICULE AUTOMOBILE RÉSISTANT À LA DÉFORMATION THERMIQUE**
BAUTEIL EINES KRAFTFAHRZEUGS, DAS GEGEN THERMISCHE VERFORMUNG RESISTENT IST
MOTOR-VEHICLE COMPONENT CAPABLE OF WITHSTANDING THERMAL DEFORMATION

(30) Priorité: 17.10.2012 FR 1259912; 06.05.2013 EP 13166647
(43) Date de publication de la demande: 26.08.2015
(73) Titulaire: Compagnie Plastic Omnium, 69007 Lyon (FR)
(72) Inventeur: COUDRON, Philippe, F-69300 Caluire&Cuire (FR)
(74) Mandataire: Remy, Vincent Noel Paul
(86) Numéro de dépôt international: PCT/FR2013/052482
(87) Numéro de publication internationale: WO 2014/060703

(56) Documents cités:
- EP-A1- 0 317 109
- EP-A1- 0 799 758
- EP-A1- 0 799 759
- DE-A1- 3 623 073
- DE-A1- 10 010 580
- DE-A1-102005 033 351
- FR-A1- 2 771 992
- GB-A- 2 463 742
- US-A- 5 011 201

## Description

La présente invention concerne les pièces de carrosserie de véhicules automobiles, qu'elles soient des pièces statiques ou des pièces d'ouvrants.

Les pièces de carrosserie sont pour la plupart en tôle métallique, le plus souvent d'acier. On voit également apparaitre de plus en plus de pièces de carrosserie en matière plastique, telles que pare-chocs, hayons, ailes, etc., qui coexistent à leurs interfaces avec des pièces restées, elles, en métal, telles qu'ailes, capots, portes, etc.

Ces pièces en matière plastique peuvent présenter des défauts qui sont avant tout perceptibles au niveau du panneau extérieur du fait que ce dernier est visible extérieurement, et en particulier à la périphérie d'un tel panneau extérieur.

Il est connu de gérer des différences de dilatations sous l'effet de la température, notamment à chaud en raison d'un fort ensoleillement, de différentes manières.

Ainsi on sait choisir les matériaux constitutifs de ces pièces selon leur CLTE, abréviation anglaise pour « Coefficient of Linear Thermal Expansion », ou coefficient de dilatation thermique linéaire en français. On sait également réaliser de telles pièces en y ménageant des renforts visant à éviter les déformations excessives. Ainsi, par leur dimensionnement, notamment en épaisseur ou sous forme de nervures, ou encore en y rapportant des renforts dans un matériau plus performant, on améliore la rigidité des pièces considérées.

On sait également traiter les défauts de manière locale, c'est-à-dire en bord de pièce où les décalages de jeu et les affleurements trop prononcés sont les plus perceptibles.

Le choix est limité pour les matériaux plastiques constitutifs de ces pièces. Il s'agit en effet d'un compromis technico-économique visant à répondre à différentes clauses contraignantes d'un cahier des charges. Il est fréquent que, dans certaines conditions de cahier des charges, notamment les conditions extrêmes d'ensoleillement qui y sont spécifiées, ces pièces se déforment trop, ce qui génère une dégradation d'aspect, notamment une dégradation de la qualité perçue des jeux et des affleurements. Les panneaux fortement déformés peuvent également générer des coincements et des rayures sur les pièces peintes situées en regard de ces panneaux, particulièrement s'il s'agit d'un système mobile.

Pour contourner ces défauts, les concepteurs sont donc contraints de sur-dimensionner les composants ou un ensemble de composants assemblés pour les rendre moins déformables, ce qui les rend alors plus lourds et plus chers, allant donc à l'opposé de l'objectif initial qui était recherché en les réalisant en plastique.

Ainsi, dans le cas des hayons, notamment ceux dits « tout en plastique », ces derniers sont constitués de deux pièces principales, le caisson, situé côté intérieur au véhicule, et le panneau, situé côté extérieur au véhicule. Le caisson et le panneau sont assemblés entre eux typiquement par collage. Ils sont aussi reliés à la caisse et soumis à différents efforts au niveau des charnières, des vérins, de la serrure, du joint périphérique d'étanchéité. Ces différents efforts sont variables selon les situations de vie, à savoir selon que le hayon est fermé, ouvert, soumis à des températures élevées où encore à un claquement particulièrement brusque. Le panneau, souvent peint, est la pièce visible quand le hayon est fermé et c'est à son niveau qu'on constate donc le plus facilement l'apparition des défauts cités, vis à vis en particulier des éléments de carrosserie environnants. Sous l'effet de la température, il se produit à la fois une perte de performance mécanique du panneau, à savoir une déformabilité plus grande ainsi qu'une dilatation des matériaux utilisés.

La perte de performance mécanique conduit à une déformation du fait des efforts générés sur le hayon, même en position fermée, à la fois par les vérins d'assistance à l'ouverture, par le joint d'étanchéité comprimé contre la caisse, et par les points d'articulation et d'ancrage sur le véhicule tels que les charnières, la serrure, les butées du hayon sur la caisse du véhicule. Les déformations sont particulièrement élevées au niveau des charnières, qui sont typiquement en acier et solidaires de la caisse, car celles-ci constituent des points de bridage du hayon. Les déformations du hayon ne sont rendues possibles que dans les zones non bridées, par exemple entre les charnières ou au-delà de celles-ci, c'est-à-dire en bord de pièce. A cette déformation mécanique s'ajoute celle due à la dilatation. La dilatation existe au niveau du panneau, mais aussi du caisson, ainsi que de manière différentielle entre ces deux composants, qui peuvent être constitués de plastiques différents, le caisson ayant typiquement un coefficient de dilatation thermique linéaire plus faible que celui du panneau. Les liaisons entre le panneau et le caisson, notamment s'ils sont collés, sont donc soumises à des efforts particulièrement intenses.

Pour valider la conception des hayons arrière dans leur comportement en température, le cahier des charges imposé prévoit généralement de réaliser un essai consistant à soumettre un hayon, ou plus précisément l'ensemble constitué de son panneau extérieur et de son caisson ou panneau intérieur, à des cycles successifs de variation en température. Ces cycles ont une amplitude d'environ 80°C mais variable selon les constructeurs et sont au nombre approximativement de 15 à 20 cycles. Dans ce type d'essai, le hayon n'a pas toujours le temps de reprendre sa forme initiale avant dilatation alors que le cycle suivant débute. On constate donc un effet d'accumulation des déformées après chaque cycle, la déformation du hayon se dégradant progressivement.

On connait notamment, d'après les documents DE-100 10580 et EP-0 799 759, un ensemble comprenant un composant de carrosserie de véhicule automobile, comprenant un premier panneau ayant un premier coefficient de dilatation thermique linéaire et un second panneau ayant un deuxième coefficient de dilatation thermique linéaire supérieur au premier coefficient de dilatation thermique linéaire. Le composant comprend en outre une pièce de liaison entre ces deux panneaux.

Chacun de ces documents divulgue un composant de véhicule automobile en accord avec les caractéristiques du préambule de la revendication 1.

L'invention a pour but de remédier aux inconvénients précités en proposant un composant carrosserie de véhicule automobile ayant une meilleure résistance aux déformations thermiques tout en étant réalisable à faible coût et avec peu de matière.

Ce but est atteint selon l'invention grâce à un composant de carrosserie de véhicule automobile, comprenant un premier panneau ayant un premier coefficient de dilatation thermique linéaire et un deuxième panneau ayant un deuxième coefficient de dilatation thermique linéaire supérieur au premier coefficient de dilatation thermique linéaire, caractérisé en ce qu'il comprend, en outre, une pièce de liaison réalisée en un matériau ayant un troisième coefficient de dilatation thermique linéaire inférieur au premier coefficient de dilatation thermique linéaire, cette pièce de liaison étant fixée au premier panneau en au moins deux points de fixation.

Avantageusement, le premier panneau et le deuxième panneau sont placés en recouvrement l'un de l'autre.

Avantageusement, le premier panneau est un panneau intérieur, tandis que le deuxième panneau est un panneau extérieur d'aspect.

Avantageusement, la pièce de liaison est réalisée dans un matériau faisant partie du groupe constitué de l'acier, de l'aluminium et des matériaux composites.

Avantageusement, les points de fixation de la pièce de liaison au premier panneau sont obtenus par un des moyens suivants : surmoulage ponctuel, vissage, rivetage, clippage, cerclage, griffage, collage, encastrement.

Avantageusement, la pièce de liaison est composée d'une feuille de matériau ayant une épaisseur comprise entre 0,5 mm et 1,5 mm.

Avantageusement, la pièce de liaison présente une direction longitudinale et la pièce de liaison présente un profil ayant une minceur définie comme étant, dans une section perpendiculaire à la direction longitudinale de la pièce de liaison, un rapport entre une largeur déployée d'une feuille constitutive de son profil et une épaisseur de cette feuille, laquelle minceur est comprise entre 20 et 80.

Avantageusement, la minceur de la pièce de liaison est sensiblement égale à 50.

Avantageusement, un espacement entre deux points consécutifs de fixation de la pièce de liaison au premier panneau est compris entre 30 et 80 mm.

Avantageusement, l'espacement entre deux points consécutifs de fixation (36) de la pièce de liaison au premier panneau est sensiblement égal à 50 mm.

Avantageusement, le composant de carrosserie est constitué de pièces mobiles pouvant prendre au moins deux positions distinctes.

Avantageusement, le composant de carrosserie constitue un ouvrant.

Avantageusement, le composant de carrosserie est choisi parmi la liste suivante : hayon, panneau arrière à ouverture vers le bas (également désigné « ridelle »), aile, capot, porte latérale, bas de caisse, bandeau, jonc d'habillage, cadre de toit, pare-choc, spoiler, toit ouvrant.

L'invention sera mieux comprise à la lecture de la description qui va suivre, donnée uniquement à titre d'exemple et faite en se référant aux dessins dans lesquels :
- La figure 1 est une vue en coupe d'un composant de carrosserie de véhicule automobile selon l'art antérieur subissant une dilatation thermique,
- La figure 2 est une vue en coupe selon un plan horizontal d'un hayon selon un mode de réalisation de l'invention, avant dilatation thermique.
- La figure 3 est une vue en coupe selon un plan horizontal de ce même hayon, après dilatation thermique.

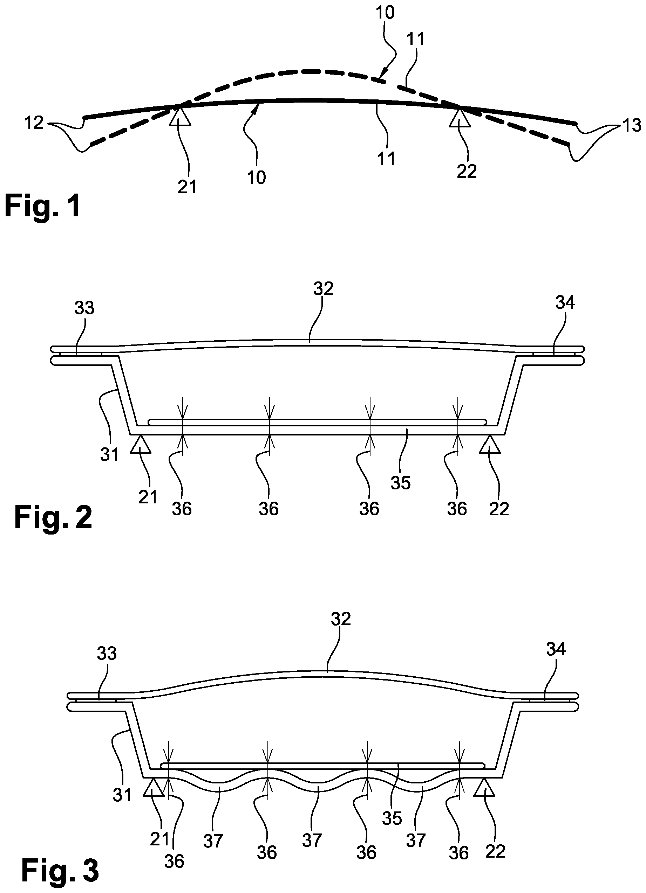

La figure 1 représente de manière schématique un composant de carrosserie de véhicule automobile. Ce composant est ici constitué d'une structure 10 représentée ici en trait plein dans une situation où elle n'est le siège d'aucune dilatation, et en trait pointillé dans une situation d'exposition à un rayonnement solaire intense.

La structure 10 est fixée sur la caisse du véhicule par deux charnières 21 et 22 schématisées ici par des triangles. La caisse du véhicule étant réalisée en un matériau à plus faible coefficient de dilatation que la structure 10, les charnières 21 et 22 présentent un écartement entre elles qui est constant dans les deux situations considérées ici d'ensoleillement ou non. Ainsi, la structure 10 présente une partie centrale 11 située entre les charnières 21 et 22, laquelle partie centrale 11 se voit contrainte en étendue horizontale par les charnières 21 et 22. Une dilatation de cette partie centrale 11 se traduit donc par une déformation en flexion ou « poumonage » vers l'extérieur du véhicule. Par continuité, des bordures 12 et 13 de la structure 10 du composant de carrosserie se déplacent vers l'intérieur du véhicule selon un effet de tangence autour des charnières respectives.

On a représenté sur la figure 2 un composant de carrosserie de véhicule automobile selon l'invention, ici un hayon. Ce hayon selon l'invention présente une structure 30 elle-même fixée sur deux charnières 21 et 22 représentées là aussi sous forme de triangles. La structure 30 est constituée d'un caisson 31 également appelé panneau intérieur et d'un panneau extérieur 32 également appelé simplement panneau. De manière classique en soi, le caisson 31 et le panneau extérieur 32 sont placés en recouvrement l'un de l'autre. Ils sont ici assemblés entre eux par deux zones de collage périphérique 33 et 34.

Le présent hayon formé d'une telle structure 30 présente en outre une pièce de liaison 35 ayant ici la forme d'un longeron 35 s'étendant en recouvrement du caisson 31. Le longeron 35 est placé contre une face du caisson 31 tournée vers le panneau 32, le longeron 35 se trouvant ainsi entre le caisson 31 et le panneau 32. Le longeron 35 est donc dissimulé à l'observation, que ce soit depuis l'extérieur ou depuis l'intérieur du véhicule. Le longeron 35 est fixé sur le caisson 31 en une suite de points de fixation 36 lesquels sont répartis sur la longueur du longeron. Ainsi, lors d'une dilatation du caisson 31 sous l'effet de la chaleur, le caisson tend à étendre le longeron 35 essentiellement dans le sens de sa longueur. Le longeron 35 est réalisé dans un matériau ayant un CLTE ou coefficient de dilatation thermique qui est inférieur à celui du caisson 31. L'effort de dilatation du caisson 31 est donc transféré sur le longeron 35 lequel absorbe cet effort et l'effort de dilatation n'est que très peu transmis sur le panneau 32 et les charnières 21 et 22.La présence de ce longeron 35 permet de contrer les dilatations du caisson 31. Le longeron 35 décrit ici n'est pas mis en liaison directe avec les charnières 21 et 22, mais il peut l'être en variante, permettant de conférer encore plus de rigidité au longeron.

Tel que représenté sur la figure 3, grâce aux différentes fixations 36 du caisson 31 sur le longeron 35 lesquelles sont réparties sur la longueur du longeron, une dilatation d'ensemble du caisson est empêchée dans une direction de préférence horizontale (c'est du moins ce que les inventeurs ont constaté sur le hayon du mode de réalisation décrit. Une telle disposition s'avère suffisante à limiter fortement les dilatations d'ensemble du hayon.

De légers effets de poumonage locaux 37 apparaissent certes entre les liaisons successives 36, néanmoins leur amplitude s'avère fortement réduite en comparaison avec le même hayon ne comportant pas un tel longeron et de telles déformations locales du caisson 31 ne sont pas transmises au panneau 32.

La partie du composant de carrosserie qui est traitée contre la déformation par dilatation est donc ici la partie intérieure structurelle du hayon, laquelle partie intérieure est typiquement désignée caisson ou panneau intérieur. Une telle partie intérieure est structurelle du fait qu'elle a pour rôle initial de porter le panneau extérieur visible et elle présente typiquement un coefficient de dilatation thermique linéaire inférieur à celui du panneau extérieur en matière plastique. Bien que la partie traitée par la présence du longeron soit la partie la moins sujette aux dilatations thermiques de par sa plus faible exposition au rayonnement solaire et de par son plus faible coefficient de dilatation thermique linéaire, il s'avère que le traitement de cette partie intérieure, ici le caisson 31, réduit notablement la déformation d'ensemble de la structure 30, réduisant indirectement mais de manière particulièrement efficace les déformations visibles du panneau 32 lequel est ici une pièce d'aspect, c'est-à-dire visible à l'utilisateur. En outre le longeron 35 s'avère jouer un rôle de ressort de rappel lors du retour à température initiale. Il aide ainsi la structure 30 à retrouver sa géométrie initiale plus rapidement, effet plus particulièrement intéressant dans le cas de l'essai cyclé en température.

Le longeron 35, empêchant une dilatation d'ensemble du caisson 31 par simple résistance à la déformation longitudinale, supprime de ce fait un poumonage d'ensemble du caisson 31. Du fait qu'il travaille essentiellement par résistance à la déformation longitudinale, il n'a plus besoin d'être dimensionné comme un renfort structurel. Il fonctionne essentiellement en traction localement entre deux points de liaison successifs 36, et ses dimensions transversales peuvent ainsi être particulièrement faibles.

Les fixations entre le caisson 31 et le longeron 35 peuvent être réalisées par surmoulage ponctuel, par vissage, par rivetage, par clippage, par cerclage, par griffage, ou par d'autres modes de fixation. Les fixations 36 entre la pièce de liaison 35 et le reste de la structure 30 peuvent être réalisées simplement en utilisant par exemple des points de fixation discrets comme les sommets d'éventuelles nervures déjà présentes dans la structure 30 au niveau du caisson 31.

Seule une raideur longitudinale étant recherchée pour le longeron 35 alors que sa raideur flexionnelle peut rester particulièrement faible, le longeron 35 peut ainsi se limiter à un élément de section fine. Il présente donc une faible masse ajoutée en comparaison aux renforts structurels habituellement utilisés pour rigidifier les panneaux et s'avère donc cohérent avec l'approche consistant à réaliser des éléments de carrosserie en matière plastique pour alléger le véhicule.

Dans cet exemple, le longeron est réalisé sous la forme d'une feuille d'acier pliée pour présenter une section en U. Cette feuille d'acier présente une épaisseur de 0,5 mm et l'acier utilisé présente un coefficient de dilatation thermique linéaire égal à 1,1.10⁻¹. Le longeron 35 présente en outre une minceur, c'est-à-dire, dans une section transversale, une valeur du rapport entre la largeur déployée de sa section et l'épaisseur de la feuille constituant cette section, qui est de l'ordre de 50. La minceur a préférentiellement une valeur comprise entre 20 et 80 pour un bon compromis entre suffisance de raideur en flexion et légèreté. En outre le longeron 35 peut présenter diverses formes en section transversale, telles qu'une section rectangulaire ou, comme dans le présent exemple, une section en U. Le longeron peut également présenter une section de forme plus complexe.

Dans ce mode de réalisation le caisson 32 est réalisé en matériau composite, ici en polypropylène à 40% de fibres de verre ou PP40%FV. Le caisson 31 présente ici une épaisseur de 3,5 mm et un coefficient de dilatation thermique linéaire de 4.10⁻⁵.

Les points de fixation 36 entre le caisson 31 et le longeron 35 sont ici espacés d'environ 50mm. Ils sont préférentiellement espacés d'un intervalle compris entre 30 mm et 80 mm, avec de préférence un minimum de 30 mm.

En variante, le longeron 35 peut être réalisé en aluminium, lequel présente un coefficient de dilatation thermique linéaire de 2,6.10⁻⁵. Le longeron peut également être réalisé en matériau composite, par exemple en matériau composite de type SMC pour Sheet Moulding Compound selon la terminologie anglo-américaine, ou composé à moulage de feuille en français. Un tel matériau composite a alors typiquement un coefficient de dilatation thermique linéaire de 1.5.10⁻⁵. Les épaisseurs choisies pour le caisson 31 et le longeron 35 sont adaptées au matériau utilisé, selon le module d'Young de ce matériau et la faisabilité de sa mise en oeuvre industrielle. En aluminium, l'épaisseur de la feuille constituant le longeron 35 est avantageusement d'environ 0,8 mm et en matériau composite SMC l'épaisseur de la feuille est avantageusement d'environ 1,5 mm.

Pour le fonctionnement en traction du longeron 35, un minimum de deux points de fixation 36 avec le caisson est suffisant mais il est préférable d'en prévoir un plus grand nombre. Un espacement d'environ 50 mm entre deux points de fixation 36 consécutifs permet une rigidification particulièrement efficace du caisson 31 et donc du composant de carrosserie dans son ensemble. Avantageusement, l'espacement entre deux points de fixation 36 se situe entre 30 et 80 mm, espacement qui est également adapté dans le cas d'une géométrie galbée ou d'une géométrie avec des changements de niveau.

Un tel contrôle des déformations autorise d'autres choix de matériaux pour le caisson 31 et pour le panneau 32. Il permet en outre de réduire le dimensionnement structurel parfois intégré dans ces éléments pour contrer leurs déformations tels qu'épaisseurs accrues ou nervures. Il permet en outre de réduire et/ou de supprimer les renforts structurels additionnels parfois placés dans le panneau 32.

La pièce de liaison 35 présente ici la forme d'un longeron mais elle peut en variante avoir une forme différente, avec une masse moindre que les solutions structurelles proposées auparavant et peut donc permettre d'alléger le composant de carrosserie dans son ensemble.

Ce type de solution ne s'applique pas seulement au cas d'un hayon ou qu'à une zone telle que décrite ici du hayon mais plus largement à toutes les zones du hayon ainsi qu'à d'autres composants de carrosserie du véhicule lesquelles sont réalisables, partiellement ou en totalité, en matières plastiques, telles qu'aile, capot, porte latérale, bas de caisse, bandeau, jonc d'habillage, cadre de toit ou encore parechoc.

L'invention n'est pas limitée aux modes de réalisation décrits ici et d'autres modes de réalisation apparaîtront clairement à l'homme du métier sans sortir du cadre de l'invention défini par les revendications.

## Revendications

1. Composant de carrosserie de véhicule automobile (30), comprenant un premier panneau (31) ayant un premier coefficient de dilatation thermique linéaire et un deuxième panneau (32) ayant un deuxième coefficient de dilatation thermique linéaire supérieur au premier coefficient de dilatation thermique linéaire, **caractérisé en ce qu'**il comprend, en outre, une pièce de liaison (35) réalisée en un matériau ayant un troisième coefficient de dilatation thermique linéaire inférieur au premier coefficient de dilatation thermique linéaire, cette pièce de liaison (35) étant fixée au premier panneau (31) en au moins deux points de fixation (36).

2. Composant selon la revendication 1, dans lequel le premier panneau (31) et le deuxième panneau (32) sont placés en recouvrement l'un de l'autre.

3. Composant selon la revendication 1 ou la revendication 2, dans lequel le premier panneau (31) est un panneau intérieur, tandis que le deuxième panneau (32) est un panneau extérieur d'aspect.

4. Composant selon l'une quelconque des revendications précédentes, dans lequel la pièce de liaison (35) est réalisée dans un matériau faisant partie du groupe constitué de l'acier, de l'aluminium et des matériaux composites.

5. Composant selon l'une quelconque des revendications précédentes, dans lequel les points de fixation (36) de la pièce de liaison (35) au premier panneau (31) sont obtenus par un des moyens suivants : surmoulage ponctuel, vissage, rivetage, clippage, cerclage, griffage.

6. Composant selon l'une quelconque des revendications précédentes, dans lequel la pièce de liaison (35) est composée d'une feuille de matériau ayant une épaisseur comprise entre 0,5 mm et 1,5 mm.

7. Composant selon l'une quelconque des revendications précédentes, dans lequel la pièce de liaison (35) présente une direction longitudinale et la pièce de liaison présente un profil ayant une minceur définie comme étant, dans une section perpendiculaire à la direction longitudinale de la pièce de liaison (35), un rapport entre une largeur déployée d'une feuille constitutive de son profil et une épaisseur de cette feuille, laquelle minceur est comprise entre 20 et 80.

8. Composant selon la revendication précédente, dans lequel la minceur de la pièce de liaison (35) est sensiblement égale à 50.

9. Composant selon l'une quelconque des revendications précédentes, dans lequel un espacement entre deux points consécutifs de fixation (36) de la pièce de liaison (35) au premier panneau (31) est compris entre 30 et 80mm.

10. Composant selon la revendication précédente, dans lequel l'espacement entre deux points consécutifs de fixation (36) de la pièce de liaison (35) au premier panneau (31) est sensiblement égal à 50 mm.

11. Composant de carrosserie de véhicule automobile (30) selon l'une quelconque des revendications précédentes, constitué de pièces mobiles pouvant prendre au moins deux positions distinctes.

12. Composant de carrosserie de véhicule automobile (30) selon la revendication précédente, constituant un ouvrant.

13. Composant de carrosserie de véhicule automobile (30) selon l'une quelconque des revendications précédentes, choisi parmi la liste suivante : hayon, panneau arrière à ouverture vers le bas (également désigné « ridelle »), aile, capot, porte latérale, bas de caisse, bandeau, jonc d'habillage, cadre de toit, pare-choc, spoiler, toit ouvrant.

## Patentansprüche

1. Komponente einer Kraftfahrzeugkarosserie (30), umfassend ein erstes Paneel (31) mit einem ersten linearen Wärmeausdehnungskoeffizienten und ein zweites Paneel (32) mit einem zweiten linearen Wärmeausdehnungskoeffizienten, der größer als der erste lineare Wärmeausdehnungskoeffizient ist, **dadurch gekennzeichnet, dass** sie ferner ein Verbindungsteil (35) umfasst, das aus einem Material mit einem dritten linearen Wärmeausdehnungskoeffizienten realisiert ist, der kleiner als der erste lineare Wärmeausdehnungskoeffizient ist, wobei dieses Verbindungsteil (35) an dem ersten Paneel (31) in mindestens zwei Befestigungspunkten (36) befestigt ist.

2. Komponente nach Anspruch 1, wobei das erste Paneel (31) und das zweite Paneel (32) einander überdeckend angeordnet sind.

3. Komponente nach Anspruch 1 oder Anspruch 2, bei dem das erste Paneel (31) ein inneres Paneel ist, während das zweite Paneel (32) ein äußeres Sichtpaneel ist.

4. Komponente nach einem der vorhergehenden Ansprüche, wobei das Verbindungsteil (35) aus einem Material realisiert ist, das zu der Gruppe gehört, die aus Stahl, Aluminium und Verbundstoffen besteht.

5. Komponente nach einem der vorhergehenden Ansprüche, wobei die Punkte zur Befestigung (36) des Verbindungsteils (35) an dem ersten Paneel (31) durch eines der folgenden Mittel erhalten werden: punktuelles Umspritzen, Verschrauben, Nieten, Einrasten, Einklemmen, Riefeln.

6. Komponente nach einem der vorhergehenden Ansprüche, wobei das Verbindungsteil (35) aus einem Materialblatt mit einer Dicke zwischen 0,5 mm und 1,5 mm besteht.

7. Komponente nach einem der vorhergehenden Ansprüche, wobei das Verbindungsteil (35) eine Längsrichtung aufweist und das Verbindungsteil ein Profil mit einer Dünnheit aufweist, die, in einem Schnitt senkrecht zu der Längsrichtung des Verbindungsteils (35), als ein Verhältnis zwischen einer ausgebreiteten Breite eines Blattes, das dessen Profil bildet, und einer Dicke dieses Blattes definiert ist, wobei die Dünnheit zwischen 20 und 80 beträgt.

8. Komponente nach dem vorhergehenden Anspruch, wobei die Dünnheit des Verbindungsteils (35) im Wesentlichen gleich 50 ist.

9. Komponente nach einem der vorhergehenden Ansprüche, wobei ein Abstand zwischen zwei aufeinander folgenden Punkten zur Befestigung (36) des Verbindungsteils (35) an dem ersten Paneel (31) zwischen 30 und 80 mm beträgt.

10. Komponente nach dem vorhergehenden Anspruch, wobei der Abstand zwischen zwei aufeinander folgenden Punkten zur Befestigung (36) des Verbindungsteils (35) an dem ersten Paneel (31) im Wesentlichen gleich 50 mm beträgt.

11. Komponente einer Kraftfahrzeugkarosserie (30) nach einem der vorhergehenden Ansprüche, die von beweglichen Teilen gebildet ist, die mindestens zwei verschiedene Positionen ennehmen können.

12. Komponente einer Kraftfahrzeugkarosserie (30) nach dem vorhergehenden Anspruch, die einen Flügel bildet.

13. Komponente einer Kraftfahrzeugkarosserie (30) nach einem der vorhergehenden Ansprüche, die aus der folgenden Liste ausgewählt ist: Heckklappe, hinteres Paneel mit Öffnung nach unten (auch als "Pritschenwand" bezeichnet), Flügel, Motorhaube, Seitentür, Wagenunterseite, Blende, Verblendungsleiste, Dachrahmen, Stoßstange, Spoiler, Schiebedach.

## Claims

1. A motor vehicle bodywork component (30), comprising a first panel (31) having a first coefficient of linear thermal expansion and a second panel (32) having a second coefficient of linear thermal expansion greater than the first coefficient of linear thermal expansion, the component being **characterized in that** it further comprises a connection part (35) made of a material having a third coefficient of linear thermal expansion less than the first coefficient of linear thermal expansion, this connection part (35) being fastened to the first panel (31) at least two fastening points (36).

2. A component according to claim 1, wherein the first panel (31) and the second panel (32) are placed so as to cover each other.

3. A component according to claim 1 or claim 2, wherein the first panel (31) is an inside panel, whereas the second panel is an outside, appearance panel.

4. A component according to any preceding claim, wherein the connection part (35) is made of a material selected from the group constituted by steel, aluminum, and composite materials.

5. A component according to any preceding claim, wherein the fastening points (36) fastening the connection part (35) to the first panel (31) are obtained by any of the following means: spot overmolding, screw fastening, riveting, clip fastening, strapping, dogging.

6. A component according to any preceding claim, wherein the connection part (35) is made of a sheet of material having thickness lying in the range 0.5 mm to 1.5 mm.

7. A component according to any preceding claim, wherein the connection part (35) presents a longitudinal direction, and the connection part presents a profile having a slenderness ratio defined in a section perpendicular to the longitudinal direction of the connection part (35) as the ratio of a deployed width of the sheet constituting its profile to a thickness of said sheet, which slenderness ratio lies in the range 20 to 80.

8. A component according to the preceding claim, wherein the slenderness ratio of the connection part (35) is substantially equal to 50.

9. A component according to any preceding claim, wherein the spacing between two consecutive fastening points (36) between the connection part (35) and the first panel (31) lies in the range 30 mm to 80 mm.

10. A component according to the preceding claim, wherein the spacing between two consecutive fastening points (36) between the connection part (35) and the first panel (31) is substantially equal to 50 mm.

11. A motor vehicle bodywork component (30) according to any preceding claim, constituted by movable parts capable of occupying at least two distinct positions.

12. A motor vehicle bodywork component (30) according to the preceding claim, constituting an opening member.

13. A motor vehicle bodywork component (30) according to any preceding claim, selected from the following list: tailgate, a downwardly-opening rear panel (also referred to as a "hatch"), a fender, a hood, a side door, a sill, a capping strip, a trim strip, a roof frame, a bumper, a spoiler, a sun roof.
